# EUROPÄISCHE PATENTSCHRIFT

(11) **EP 0 582 817 B1**
(45) Veröffentlichungstag und Bekanntmachung des Hinweises auf die Patenterteilung: **02.10.1996**
(21) Anmeldenummer: 93110156.2
(22) Anmeldetag: 25.06.1993
(51) Int. Cl.: F25B 9/02

(54) **Kühlsystem zum Abkühlen eines Kühlobjektes auf tiefe Temperaturen mittels eines Joule-Thomson-Kühlers**
Refrigeration system for cooling down an object to low temperatures by a Joule Thomson cooler
Système frigorifique pour refroidissement d'un objet à des basses températures par un refroidisseur Joule Thomson

(30) Priorität: 13.08.1992 DE 4226820
(43) Veröffentlichungstag der Anmeldung: 16.02.1994
(60) Teilanmeldung: 95116848.3
(73) Patentinhaber: Bodenseewerk Gerätetechnik GmbH, 88662 Überlingen (DE)
(72) Erfinder: Hipper, Roland, D-7770 Überlingen (DE); Reischmann, Hans-Ludwig, D-7770 Überlingen (DE); Rid, Robert, D-7778 Markdorf (DE)
(74) Vertreter: Weisse, Jürgen, Dipl.-Phys. Patentanwalt

(56) Entgegenhaltungen:
- EP-A- 0 245 164
- EP-A- 0 388 277
- GB-A- 1 238 470
- GB-A- 2 085 139
- GB-A- 2 193 799
- GB-A- 2 250 085
- US-A- 3 324 674
- US-A- 3 413 819
- US-A- 3 464 227
- US-A- 3 942 010
- US-A- 4 126 017
- US-A- 5 119 637

## Beschreibung

### Technisches Gebiet

Die Erfindung betrifft ein Kühlsystem zum Abkühlen eines Kühlobjektes auf tiefe Temperaturen mittels eines Joule-Thomson-Kühlers mit einer Expansionsdüse, bei welchem ein elektrischer Temperatursensor vorgesehen ist, der auf die Temperatur des Kühlobjektes anspricht und bei welchem der Durchfluß durch die Expansionsdüse mittels eines Drosselkörpers regelbar ist, der von einem Stellglied temperaturabhängig verstellbar ist, das von dem elektrischen Temperatursensor steuerbar ist im Sinne einer Erhöhung des Durchflusses bei Erhöhung der Temperatur des Kühlobjektes über einen Sollwert hinaus. Insbesondere bezieht sich die Erfindung auf ein Kühlsystem für einen in dem Mantelhohlraum eines Dewar-Gefäßes angeordneten, infrarotempfindlichen Sensor.

### Zugrundeliegender Stand der Technik

Durch die GB-A-1 238 470 ist ein Joule-Thomson-Kühler mit einer Expansionsdüse bekannt, bei welchem der Durchfluß durch die Expansionsdüse mittels eines Drosselkörpers regelbar ist. Der Drosselkörper ist von einem Stellglied mit einer Betätigungsstange 22 und einem Balgen 23 temperaturabhängig verstellbar. Die Temperatur des Kühlobjektes wird von einem thermo-elektrischen Temperatursensor gemessen. Das Stellglied ist von diesem Temperatursensor über einen Vorverstärker und einen Regler steuerbar, der über ein elektro-pneumatisches Ventil den Druck auf der Außenseite des Balgens beeinflußt.

Die GB-A-2 193 799 beschreibt einen Kühler, bei welchem Mittel zur Messung der Temperatur an oder wenigsten angrenzend an der thermischen Last vorgesehen sind. Von diesen Mitteln zur Messung der Temperatur wird über einen Regler die Zufuhr von Kühlmittel geregelt.

Durch die Temperaturregelung allein wird der Durchfluß des Arbeitsgases mit Absinken der Temperatur des Kühlobjektes vermindert. Das führt beim Einschalten des Kühlsystems dazu, daß auch die Temperaturänderungen mit abnehmender Temperatur des Kühlobjektes stark abnehmen. Das Kühlobjekt erreicht dann nach dem Einschalten des Kühlsystems seine Solltemperatur nur langsam.

Ein weiteres Problem, das bei Joule-Thomson-Kühlern auftritt, besteht darin, daß sich die Entspannungsdüse durch ausfrierende Verunreinigungen des Arbeitsgases, z.B. CO₂, zusetzen kann.

### Offenbarung der Erfindung

Der Erfindung liegt die Aufgabe zugrunde, das Temperaturverhalten von Kühlern beim Einschalten zu verbessern.

Der Erfindung liegt weiter die Aufgabe zugrunde, die Entspannungsdüse von Zeit zu Zeit von ausgefrorenen Verunreinigungen zu befreien.

Erfindungsgemäß ist zur Lösung dieser Aufgaben das Stellglied zusätzlich von einer zeitabhängigen Steuerung im Sinne einer Erhöhung des Durchflusses steuerbar.

Es kann dann durch die zeitabhängige Steuerung nach dem Einschalten des Kühlsystems das Stellglied für eine vorgegebene Zeitspanne im Sinne einer Erhöhung des Durchflusses ansteuerbar sein. Das führt dazu, daß die gewünschte Temperatur nach dem Einschalten des Kühlsystems schneller erreicht wird. Bei einem Absinken der Temperatur des Kühlobjektes wird nicht sofort der Durchfluß des Arbeitsgases durch die Entspannungsdüse entsprechend gedrosselt. Es wird für eine begrenzte Zeit noch ein erhöhter Durchfluß aufrechterhalten und damit eine schellere Abkühlung erreicht. Erst dann setzt die eigentliche Regelung ein.

Es kann aber auch durch die zeitabhängige Steuerung das Stellglied während des Regelbetriebs in vorgegebenen Zeitintervallen im Sinne einer Erhöhung des Durchflusses ansteuerbar sein. Dann wird von Zeit zu Zeit die Entspannungsdüse kurzfristig aufgesteuert. Durch den erhöhten Durchfluß von Arbeitsgas werden Eiskristalle von ausgefrorenen Verunreinigungen weggeblasen.

Das Kühlobjekt kann ein lichtempfindlicher Sensor sein.

### Kurze Beschreibung der Zeichnungen

Ausführungsbeispiele der Erfindung sind nachstehend unter Bezugnahme auf die zugehörigen Zeichnungen näher erläutert.
- Fig.1: zeigt eine erste Ausführung eines Kühlsystems für einen infrarotempfindlichen Sensor teilweise im Schnitt,
- Fig.2: zeigt die Temperaturregelung bei dem Kühlsystem von Fig.1.
- Fig.3: zeigt eine zusätzliche Temperatursteuerung bei dem Kühlsystem von Fig.1.
- Fig.4: ist ein Diagramm von Durchfluß bzw. Temperatur über der Zeit und veranschaulicht die Wirkungsweise der zusätzlichen Temperatursteuerung von Fig.3.

### Bevorzugte Ausführungen der Erfindung

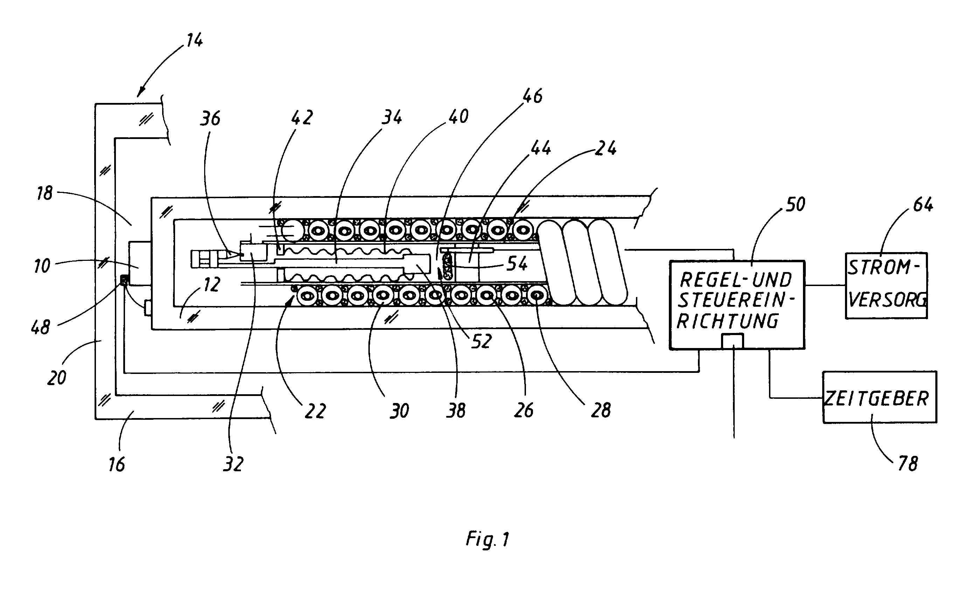

In Fig.1 ist mit 10 ein Sensor bezeichnet. Der Sensor 10 ist ein infrarotempfindlicher Sensor-Baustein mit einer Anordnung von Detektorelementen. Der Sensor 10 sitzt auf der Stirnfläche des Innenmantels 12 eines Dewar-Gefäßes 14. Der Außenmantel des Dewar-Gefäßes 14 ist mit 16 bezeichnet. Der Sensor 10 ist in dem Mantelhohlraum 18 zwischen Innenmantel 12 und Außenmantel 16 des Dewar-Gefäßes 14 angeordnet. Dieser Mantelhohlraum 18 ist evakuiert. Die Stirnfläche 20 des Außenmantels 16 bildet ein infrarotdurchlässiges Fenster.

In dem Dewar-Gefäß 14 sitzt ein Joule-Thomson-Kühler 22. Der Joule-Thomson-Kühler 22 weist ein Innenrohr 24 auf. Auf das Innenrohr 24 ist ein Wärmetauscher 26 schraubenförmig aufgewickelt. Der Wärmetauscher 26 enthält ein Rohr 28, das zur Verbesserung des Wärmeüberganges mit Rippen 30 versehen ist. Das Rohr 28 erstreckt sich von einem "warmen" Ende, rechts in Fig.l zu einem "kalten" Ende links in Fig.1. An dem kalten Ende mündet das Rohr 28 in einer Entspannungsdüse 32. An dem warmen Ende wird in das Rohr 28 ein Arbeitsgas unter hohem Druck eingeleitet. An der Entspannungsdüse 32 wird das Arbeitsgas entspannt. Dabei kühlt sich das Arbeitsgas ab. Das entspannte und abgekühlte Arbeitsgas strömt dann im Gegenstrom durch den Wärmetauscher 26. Dabei erfolgt eine Vorkühlung des vorlaufenden Arbeitsgases. Schließlich wird eine Abkühlung auf eine sehr niedrige Temperatur erreicht. Das ist das Prinzip des üblichen Joule-Thomson-Kühlers. Der Joule-Thomson-Kühler 22 kühlt auch den Sensor 10.

Ein langgestreckter Träger 34 erstreckt sich zentral in dem Innenrohr 24 und ragt auf der Seite der Entspannungsdüse 32 aus dem Innenrohr 24 heraus. Das herausragende Ende ist J-förmig, greift über die Entspannungsdüse 32 und trägt einen Drosselkörper 36. Der Drosselkörper 36 ist gleichachsig zu der Entspannungsdüse 32 und hat ein konisches Ende, das in die Entspannungsdüse 32 ragt. Das verdickte innere Ende 38 des Trägers 34 ist mit dem Rand eines Balgens 40 verbunden. Der andere Rand des Balgens 40 ist mit einem Bund 42 verbunden, der von dem Innenrohr 24 einwärts ragt. In dem Innenrohr 24 sitzt ferner ein Stopfen 44. Der Stopfen 44, die Wandung des Innenrohres 24, der Balgen 40 und die innere Stirnfläche des Trägers 34 begrenzen eine Druckmittelkammer 46. Die Druckmittelkammer ist mit einem sich bei Temperaturerhöhung ausdehnenden Gas gefüllt. Wenn sich das in dem Wärmetauscher 26 im Gegenstrom fließende Arbeitsgas abkühlt, erfolgt durch das dünnwandige Innenrohr hindurch eine Abkühlung des Gases in der Druckmittelkammer 46. Das Gas zieht sich dann zusammen. Damit wird der Träger 34 nach rechts in Fig.1 bewegt. Der Balgen 40, der am linken Rand fest an dem Innenrohr 24 gehalten ist, wird gedehnt. Dabei wird der Drosselkörper 36 nach rechts in Fig.1 weiter in die Entspannungsdüse 32 hineinbewegt. Der Durchfluß von Arbeitsflüssigkeit durch die Entspannungsdüse wird vermindert. Dadurch wird wiederum die Kühlleistung des Joule-Thomson-Kühlers 22 vermindert. Hierdurch erfolgt eine Regelung, welche eine mittlere Temperatur des durch den Wärmetauscher 26 fließenden Arbeitsgases konstant zu halten trachtet. Dadurch wird aber noch keine Konstanz der Temperatur des Sensors 10 gewährleistet.

Aus diesem Grunde ist ein elektrischer Temperatursensor 48 vorgesehen. Der Temperatursensor 48 spricht unmittelbar auf die Temperatur des Kühlobjektes, nämlich des Sensors 10 an. Zu diesem Zweck ist der Temperatursensor 48 z.B. in den infrarotempfindlichen Sensor-Baustein integriert. Der Temperatursensor 48 ist mit einer Regel- und Steuereinrichtung 50 verbunden. Die Regel- und Steuervorrichtung 50 steuert ein Stellglied 52, welches seinerseits die Stellung des Drosselkörpers 36 bestimmt.

Dieses Stellglied 52 umfaßt die Druckmittelkammer 46, den federnden Balgen 40 und den Träger 34 sowie zusätzlich eine in der Druckmittelkammer 46 angeordnete Heizwendel 54. Wenn die vom Temperatursensor 48 gemessene Temperatur des Sensors 10 eine gewünschte Solltemperatur überschreitet, dann wird von der Regel- und Steuereinrichtung 50 ein Heizstrom durch die Heizwendel 54 erzeugt. Dieser Heizstrom bewirkt eine Erwärmung des Gases in der Druckmittelkammer 46. Der Balgen 40 wird zusammengedrückt, und der Träger 34 wird nach links in Fig.1 bewegt. Dadurch wird die Entspannungsdüse 32 von dem Drosselkörper 36 weiter freigegeben. Der Durchfluß von sich entspannendem Arbeitsgas wird erhöht. Dadurch wird der Sensor 10 stärker gekühlt. Auf diese Weise ist der "thermisch-mechanischen" Regelschleife über den Wärmeaustausch zwischen Arbeitsgas und Gas in der Druckmittelkammer 46 eine "elektrische" Regelschleife über die Regel- und Steuereinrichtung 50 überlagert. Es wird die Temperatur des Kühlobjektes selbst geregelt.

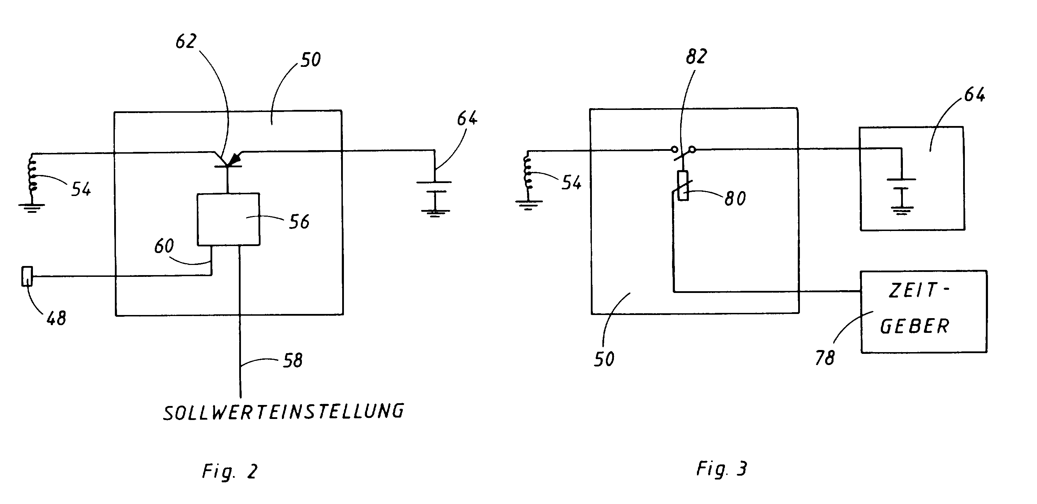

Die elektrische Regelschleife ist in Fig.2 schematisch dargestellt. Ein Regler 50 erhält einen Sollwert über einen Eingang 58. An einem Eingang 60 liegt der Temperatur-Istwert von dem Temperatursensor 48 (Fig.1). Der Regler steuert einen Transistor 62. Der Transistor 62 steuert den Strom, der von einer Stromversorgung 64 durch die Heizwendel 54 (Fig.1) geschickt wird.

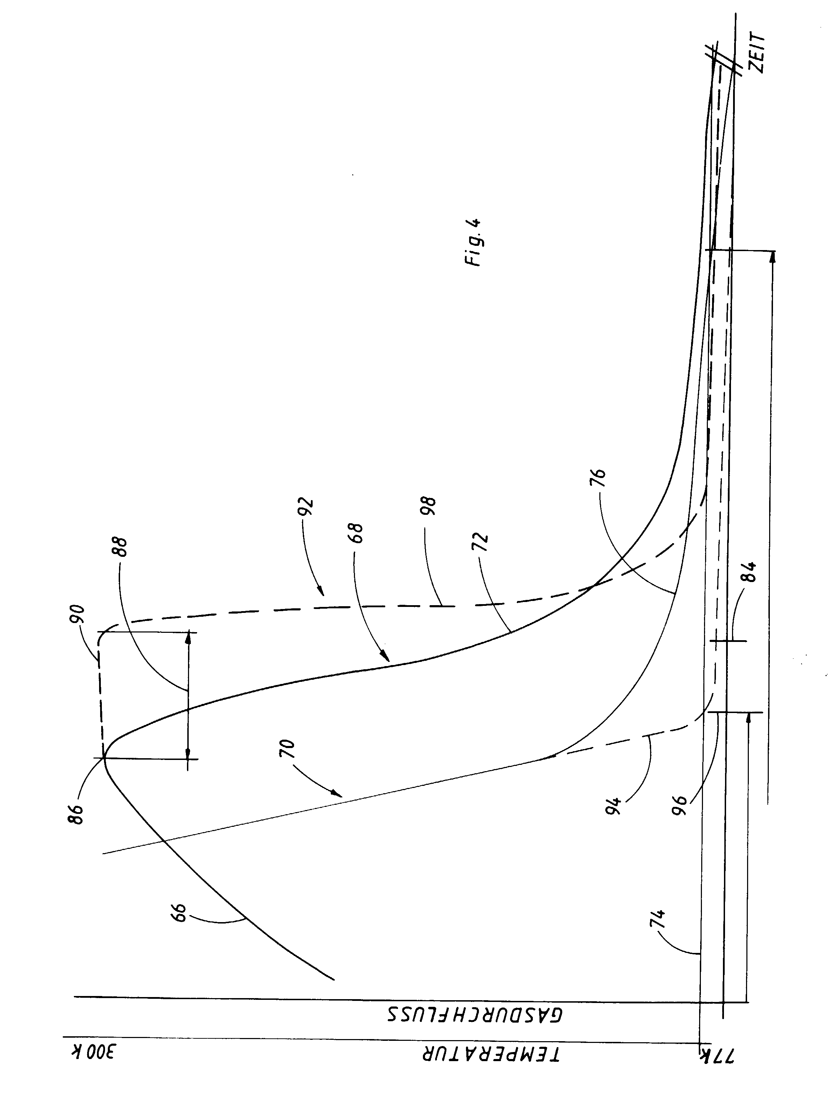

Wie oben schon angedeutet wurde, kann die Heizwendel 54 noch eine weitere Funktion erfüllen, die anhand von Fig.4 erläutert wird: Beim Einschalten des Kühlsystems ist zunächst die Temperatur sowohl des Sensors 10 als auch des im Gegenstrom zurückfließenden Arbeitsgases hoch. Das Gas in der Druckmittelkammer 46 dehnt sich so aus. Der Drosselkörper 36 gibt die Entspannungsdüse 32 frei und der Durchfluß von Arbeitsgas steigt an. Das ist der ansteigende Abschnitt 66 der Kurve 68 in Fig.4. Diese Kurve 68 zeigt den Verlauf des Durchflusses von Arbeitsgas durch die Entspannungsdüse 32 als Funktion der Zeit. Es erfolgt dann eine Abkühlung sowohl des im Gegenstrom fließenden Arbeitsgases als auch des Sensors 10. Das ist aus Kurve 70 ersichtlich, die den Verlauf der Temperatur des Sensors 10, also des Kühlobjektes, als Funktion der Zeit zeigt. Dementsprechend wird der Heizstrom durch die Heizwendel 54 reduziert oder unterbrochen. Auch das Arbeitsgas auf der Außenseite des Innenrohres 24 kühlt das Gas in der Druckmittelkammer 46. Das Gas in der Druckmittelkammer 46 zieht sich zusammen. Der Träger 34 bewegt sich nach rechts in Fig.1. Der Balgen 40 wird dabei gedehnt. Der Drosselkörper 36 wird in die Entspannungsdüse 32 hineinbewegt. Der Durchfluß des Arbeitsgases wird vermindert. Das ist durch den abfallenden Abschnitt 72 der Kurve 68 in Fig.4 dargestellt. Durch diese Verminderung des Durchflusses läuft die Temperatur des Sensors 10 nur relativ langsam, quasi-asymptotisch in die Solltemperatur von z.B. 77K ein, die durch Linie 74 gegeben ist. Dieser quasi-asymptotische Temperaturverlauf ist durch den Kurvenabschnitt 76 der Kurve 70 in Fig.4 dargestellt. Dieses langsame Einlaufen in die Solltemperatur beim Einschalten des Kühlsystems ist nachteilig.

Aus diesem Grunde enthält die Regel- und Steuereinrichtung 50 zusätzlich ein von einem Zeitgeber 78 gesteuertes Relais 80 (oder einen elektronischen Bauteil gleicher Funktion). Über den Relaiskontakt 82 ist die Stromversorgung auf die Heizwendel 54 aufschaltbar. Über dieses Relais 80 wird die Heizwendel 54 beim Einschalten des Kühlsystems für eine vorgegebene Zeitspanne, nämlich bis zu einem in Fig.4 mit 84 markierten Zeitpunkt angeschaltet. Dieser Zeitpunkt 84 liegt später als das Maximum 86 der Kurve 68. Dadurch bleibt der Durchfluß nach dem Erreichen des Maximums 86 noch für eine Zeitspanne, die in Fig.4 mit 88 markiert ist, auf dem erhöhten Niveau. Das ist in Fig.4 durch einen Abschnitt 90 einer modifizierten Durchflußkurve 92 dargestellt. Die Durchflußkurve 90 zeigt den Durchfluß durch die Entspannungsdüse 32 als Funktion der Zeit bei Einschalten der Heizwendel 54 bis zum Zeitpunkt 84. Die Temperatur des Sensors 10 sinkt dann schneller ab und erreicht in kürzerer Zeit die Solltemperatur (Linie 74). Das ist in Fig.4 durch den gestrichelten Kurvenabschnitt 94 dargestellt. Der Zeitpunkt des Erreichens der Solltemperatur ist in Fig.4 mit 96 markiert. Nach Abschalten der Heizwendel 54 über den Relaiskontakt 82 wird die normale Regelung wirksam. Da die Temperatur des Sensors 10 und die Temperatur des im Gegenstrom fließenden, entspannten Arbeitsgases schon stark abgesunken sind, wird der Durchfluß des Arbeitsgases durch die Entspannungsdüse 32 stark gedrosselt. Der Durchfluß sinkt schnell ab, wie durch den Kurvenabschnitt 98 der Durchflußkurve 92 angedeutet ist.

Die Heizwendel und das Relais 80 mit dem Zeitgeber 78 konnen auch noch eine weitere Funktion erfüllen: Der Zeitgeber 78 kann nach Art eines Intervallschalters das Relais in vorgegebenen Zeitabständen für ein bestimmtes Zeitintervall einschalten. Dadurch wird jedesmal die Heizwendel 54 angeschaltet und die Entspannungsdüse 32 aufgesteuert. Die Entspannungsdüse 32 ist dann weit offen. Der Durchfluß von Arbeitsgas ist relativ hoch. Dadurch werden Eiskristalle, die durch Ausfrieren von Verunreinigungen des Arbeitsgases auftreten und die Entspannungsdüse zusetzen können, mechanisch gelöst und weggeblasen.

## Patentansprüche

1. Kühlsystem zum Abkühlen eines Kühlobjektes (10) auf tiefe Temperaturen mittels eines Joule-Thomson-Kühlers (22) mit einer Expansionsdüse (32), bei welchem ein elektrischer Temperatursensor (48) vorgesehen ist, der unmittelbar auf die Temperatur des Kühlobjektes (10) anspricht und bei welchem der Durchfluß durch die Expansionsdüse (32) mittels eines Drosselkörpers (36) regelbar ist, der von einem Stellglied (52) temperaturabhängig verstellbar ist, das von dem elektrischen Temperatursensor (48) steuerbar ist im Sinne einer Erhöhung des Durchflusses bei Erhöhung der Temperatur des Kühlobjektes (10) über einen Sollwert hinaus, **dadurch gekennzeichnet, daß** das Stellglied (52) zusätzlich von einer zeitabhängigen Steuerung (78) im Sinne einer Erhöhung des Durchflusses steuerbar ist.

2. Kühlsystem nach Anspruch 2, **dadurch gekennzeichnet, daß** durch die zeitabhängige Steuerung (78) nach dem Einschalten des Kühlsystems das Stellglied (52) für eine vorgegebene Zeitspanne im Sinne einer Erhöhung des Durchflusses ansteuerbar ist.

3. Kühlsystem nach Anspruch 1 oder 2, **dadurch gekennzeichnet, daß** durch die zeitabhängige Steuerung (78) das Stellglied (52) während des Regelbetriebs in vorgegebenen Zeitintervallen im Sinne einer Erhöhung des Durchflusses ansteuerbar ist.

4. Kühlsystem nach einem der Ansprüche 1 bis 3, **dadurch gekennzeichnet**, **daß** das Kühlobjekt ein lichtempfindlicher Sensor (10) ist.

## Claims

1. Cooling system for the cooling-down of an object to be cooled (10) to low temperatures by means of a Joule-Thomson cooler (22) with an expansion nozzle (32), wherein an electrical temperature sensor (48) is provided which responds directly to the temperature of the object to be cooled (1=9 and wherein the through-flow through the expansion nozzle (32) is controllable by means of a restrictor body (36), which is adjustable by an actuator (52) dependent on temperature, the actuator being controlled by the electrical temperature sensor (48) to increase the through-flow, when the temperature of the object to be cooled (10) rises, **characterized in that** the actuator (52), in addition, is controllable by a time-dependent control (78) in the sense to increase the through-flow.

2. Cooling system as claimed in claim 2, **characterized in that** the actuator is operated by the time dependent control (52) to increase the through flow for a predetermined time interval after the cooling system has been switched on.

3. Cooling system as claimed in claim 1 or 2, **characterized in that** the actuator is operated by the time dependent control (78), during automatic control operation, to increase the through flow in predetermined time intervals.

4. Cooling device as claimed in anyone of the claims 1 to 3, **characterized in that** the object to be cooled is a light sensitive sensor (10).

## Revendications

1. Système refroidisseur destiné à refroidir un objet refroidisseur (10) à de basses températures au moyen d'un refroidisseur Joule-Thomson (22) muni d'une tuyère d'expansion (32), système pour lequel un capteur électrique de température (48) est prévu qui répond directement à la température de l'objet refroidisseur (10) et pour lequel la circulation par la tuyère d'expansion (32) est susceptible d'être réglée au moyen d'un corps d'étranglement (36) qui est susceptible d'être ajusté en fonction de la température par un membre de réglage (52) qui est susceptible d'être commandé par le capteur électrique (48) en vue d'une augmentation de la circulation lors d'une augmentation de la température de l'objet refroidisseur (10) au-delà d'une valeur de consigne, **caractérisé par le fait que** le membre de réglage (52) est susceptible d'être commandé en plus par une commande (78) dépendante du temps en vue d'une augmentation de la circulation.

2. Système refroidisseur selon la revendication 2, **caractérisé par le fait que** le membre de réglage (52) est susceptible d'être commandé par la commande (78) dépendante du temps après l'enclenchement du système refroidisseur pour un laps de temps prédéfini en vue d'une augmentation de la circulation.

3. Système refroidisseur selon la revendication 1 ou 2, **caractérisé par le fait que** le membre de réglage (52) est susceptible d'être commandé par la commande (78) dépendante du temps pendant le fonctionnement en réglage dans des intervalles de temps prédéfinis en vue d'une augmentation de la circulation.

4. Système refroidisseur selon l'une des revendications 1 à 3, **caractérisé par le fait que** l'objet refroidisseur est un capteur photosensible (10).
